# EUROPEAN PATENT APPLICATION

(11) **EP 4 783 420 A1**
(43) Date of publication of application: **29.07.2026**
(21) Application number: 25305116.3
(22) Date of filing: 28.01.2025
(51) Int. Cl.: H02K 1/2783, H02K 1/28

(54) **MOTOR COMPRISING A PERMANENT MAGNET ROTOR WITH HALBACH ARRAY**

(71) Applicant: Goodrich Actuation Systems SAS, 27950 Saint-Marcel (FR)
(72) Inventor: Benarous, Maamar, Coventry, CV7 7DU (GB); Medina, Raphael, 93380 Pierrefitte Sur Seine (FR); Potier, Karl, 75014 Paris (FR)
(74) Representative: Casalonga

(57) **Abstract**

A motor (2) configured to drive an actuator. Wherein the motor (2) includes a stator (4) and a rotor (6). Wherein the rotor (6) includes an array of permanent magnets (8) in a Halbach arrangement and a support structure (12) configured to support the array of permanent magnets (8). The support structure (12) is non-magnetic.

## Description

### Technical Field

The present disclosure relates to a motor configured to drive an actuator. In particular, the disclosure relates to a motor configured to drive an actuator for actuating a flight surface (e.g. a spoiler) of an aircraft.

### Background Art

Actuators are used in aircraft to actuate components such as flight surfaces of the aircraft. Such actuators may be driven by electric motors. It may be desirable for the actuators to be driven quickly for a short period of time and this requires a large amount of power, drawing a large current. One solution is to increase the size (and thus power) of the motor. However, this may increase the inertia of the motor and it goes against the general desire for aircraft components to be lighter and smaller.

### Summary of the Disclosure

According to the present disclosure, there is provided a motor configured to drive an actuator, wherein the motor comprises a stator and a rotor, wherein the rotor comprises an array of permanent magnets in a Halbach arrangement and a support structure configured to support the array of permanent magnets, wherein the support structure is non-magnetic.

Therefore, the present disclosure provides a motor configured to drive an actuator.

In some examples, the rotor is configured to connect to the actuator, so to drive the actuator.

The support structure is (comprises, is formed from or of) a non-magnetic material. In some examples, the support structure consists of (is solely formed from or of) a non-magnetic material. In these examples the support structure does not comprise (is not formed from or of) any magnetic materials.

The support structure is configured to support the array of permanent magnets. Thus, the array of permanent magnets may be mounted on the support structure.

In some examples, the array of permanent magnets is fixedly mounted on the support structure. Thus, in some examples, the support structure and the array of permanent magnets are configured to rotate together about a (e.g. central, longitudinal) rotational axis of the motor.

In some examples, the stator, the rotor, the array of permanent magnets and/or the support structure are (each) arranged (e.g. symmetrically) around a (e.g. central, longitudinal) rotational axis of the motor.

In some examples, the array of permanent magnets is arranged (in the Halbach arrangement) such that the magnetic flux from the array of permanent magnets is substantially zero in at least one direction. This arrangement of permanent magnets augments the magnetic flux on one side of the array while cancelling the flux to substantially zero on the other side. This may be achieved by having a spatially rotating pattern of magnetisation of the permanent magnets in the array.

In some examples, the array of permanent magnets is arranged such that the magnetic flux from the array of permanent magnets is substantially zero radially inwards of the array of permanent magnets. Thus, the permanent magnets in the array may be arranged (in the Halbach arrangement, e.g. with a spatially rotating pattern of magnetisation) such that the magnetic flux is cancelled substantially to zero radially inwards of the array of permanent magnets.

The motor may have any suitable and desired configuration. In some examples, the rotor is located radially inwards of the stator. The rotor and the stator may extend over substantially the same axial length and position of the motor. The rotor and the stator may be coaxial, e.g. about the rotational axis of the motor. The support structure and/or the array of permanent magnets may be coaxial, e.g. about the rotational axis of the motor.

The support structure may be arranged relative to the array of permanent magnets, and be arranged to support the array of permanent magnets, in any suitable and desired way. In some examples, the support structure is located (at least partially) radially inwards of the array of permanent magnets.

The support structure may have any suitable and desired form. In some examples, the support structure comprises a shaft, e.g. a drive shaft, e.g. a shaft configured to be coupled to an actuator, e.g. a shaft configured to drive an actuator.

In some examples, the support structure (e.g. the shaft) comprises a (e.g. substantially hollow) prism, e.g. extending along the rotational axis of the motor (and of the support structure). The size and/or shape of the prism may vary along the axial length of the support structure.

The prism may have any suitable and desired cross-sectional shape (in a plane perpendicular to the rotational axis of the motor). In some examples, the support structure (e.g. the shaft) comprises a (e.g. substantially hollow) cylinder.

In some examples, the support structure (e.g. the shaft) comprises one or more stiffeners, e.g. arranged to stiffen the support structure when subject to external forces, e.g. torques. In some examples, the stiffeners extend inside the support structure (e.g. the shaft) in a direction perpendicular to the rotational axis of the motor.

In some examples, the one or more stiffeners are (e.g. each) formed as a unitary piece with the support structure. In some examples, the one or more stiffeners are (e.g. each) formed separately from the support structure and attached to the support structure (e.g. using a fixing member and/or an adhesive). In some examples, the support structure and/or the one or more stiffeners are (e.g. each) at least partly formed by additive manufacturing.

In some examples, the one or more stiffeners (e.g. each) comprise the same material(s) as the support member. For example, the one or more stiffeners may (e.g. each) comprise titanium, aluminium and/or a composite material such as carbon fibre. In some examples, the one or more stiffeners may (e.g. each) comprise different material(s) from the support member.

In some examples, the support structure extends (axially) beyond the array of permanent magnets in the direction along the rotational axis of the motor. This may enable the support structure to connect to (e.g. so to drive) the actuator.

The support structure may be (e.g. formed from or of) any suitable and desired non-magnetic material. In some examples, the support structure is formed from or of, e.g. comprises, e.g. consists of, a non-ferrous material. In some examples, the support structure is formed from or of, e.g. comprises, e.g. consists of, a composite material, optionally carbon fibre. In some examples, the support structure comprises e.g. consists of, e.g. is formed from or of aluminium or titanium.

In some examples, the support structure is formed from or of, e.g. comprises, e.g. consists of, a low density material, for example a material with a density lower than that of steel. In some examples, the support structure is formed from or of, e.g. comprises, e.g. consists of, a material having a density less than 7.5 g/cm³, e.g. less than 5 g/cm³, e.g. less than 3 g/cm³. This may help to reduce the weight of the support structure, thereby helping to reduce the inertia of the motor.

In some examples, the motor has a diameter of between 30 mm and 150 mm, preferably between 50 mm and 120 mm, preferably between 70 mm and 90 mm, preferably approximately 80 mm.

In some examples, the array of permanent magnets has a length of between 40 mm and 120 mm in the direction along the rotational axis of the motor, preferably between 50 mm and 100 mm, preferably between 60 mm and 80 mm, preferably approximately 70 mm.

In some examples, the rotor is configured to rotate at up to 20000 rpm, optionally up to 18000 rpm, optionally up to 15000 rpm.

In some examples, the inertia of the motor is less than 2 x 10⁻⁴ kgm², preferably less than 1.75 x 10⁻⁴ kgm², preferably less than 1.5 x 10⁻⁴ kgm², preferably less than 1.25 x 10⁻⁴ kgm².

In some examples, the motor includes a sleeve. The sleeve may be configured to help retain the array of permanent magnets in their intended position (e.g. during rotation of the rotor). In some examples, the sleeve comprises a (thin) piece of material (e.g. a (sheet of) metal and/or a (sheet of) plastic) wrapped around one or more (e.g. all) of the permanent magnets of the array of permanent magnets.

In some examples, the sleeve is located radially outwards of the array of permanent magnets. In some examples, the sleeve forms a barrier to prevent one or more of the permanent magnets from moving radially outwards from their intended position (e.g. during rotation of the rotor). It will be understood that, in some embodiments, the sleeve is not present. The array of permanent magnets may additionally or alternatively be retained in their intended position in any suitable and desired way (e.g. using an adhesive and/or a support structure).

The present disclosure also provides a system for actuating a flight surface of an aircraft, comprising a motor as described herein and an actuator configured to actuate the flight surface, e.g. between a closed position and an open position.

In some examples, the actuator comprises an output member connected to the flight surface, wherein the output member is configured to move between a retracted position, in which the flight surface is in the closed position, and an extended position, in which the flight surface is in the open position. The motor may be configured to drive the output member between the retracted position and the extended position.

In some examples, the support structure of the motor is coupled to the output member of the actuator. The support structure may be coupled to the output member (e.g. via a roller screw), such that rotation of the rotor is arranged to be converted into linear displacement of the output member.

The present disclosure also provides for a system for driving a gear system of an aircraft, comprising a motor as described herein and a gear system connected to the support structure. The gear system may be further connected to any suitable and desired component or system (e.g. an actuator as described herein).

### Brief Description of the Drawings

Certain examples of the present disclosure will now be described with reference to the accompanying drawings in which:
Figure 1 is a cross-sectional view of an electric motor, perpendicular to the longitudinal axis of the motor;
Figures 2 and 3 are cross-sectional schematic views of part of an electric motor, perpendicular to the longitudinal axis of the motor; and
Figure 4 is a cross-sectional view of an electric motor, parallel to the longitudinal axis of the motor.

### Detailed Description

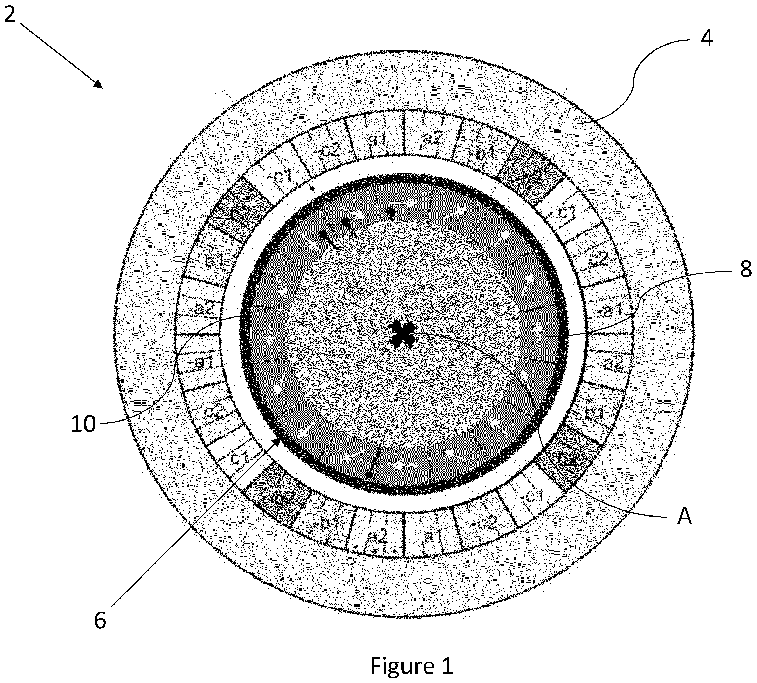

Figure 1 is a cross-sectional view of an electric motor 2, perpendicular to the longitudinal axis A of the motor 2.

The motor 2 includes a stator 4 and a rotor 6. The rotor 6 is located radially inwards of the stator 4. The rotor 6 is configured to rotate about the longitudinal axis A of the motor 2.

The rotor 6 includes an array of (permanent) magnets 8 (only one is labelled for clarity). The array of magnets 8 are in a Halbach arrangement. The arrow on each magnet 8 indicates the orientation of the magnetic flux produced by that magnet 8. The magnets 8 are arranged such that the magnetic flux from the array is cancelled to substantially zero radially inwards of the rotor 6. Therefore, the array of magnets 8 is configured to concentrate the magnetic flux radially outwards, towards the stator 4.

In this example, the rotor 6 further includes a sleeve 10 located radially outwards of the array of magnets 8. The sleeve 10 may be configured to help retain the array of magnets 8 in their intended position, in particular during rotation of the rotor 6. In some examples, the sleeve 10 is a thin piece of material (e.g. a metal and/or a plastic) wrapped around the array of magnets 8. The sleeve 10 may form a barrier to prevent one or more of the magnets 8 from moving radially outwards from their intended position. It will be understood that, in some embodiments, the sleeve 10 is not present. The array of magnets 8 may additionally or alternatively be retained in their intended position in any suitable and desired way (e.g. using an adhesive and/or a support structure as discussed below).

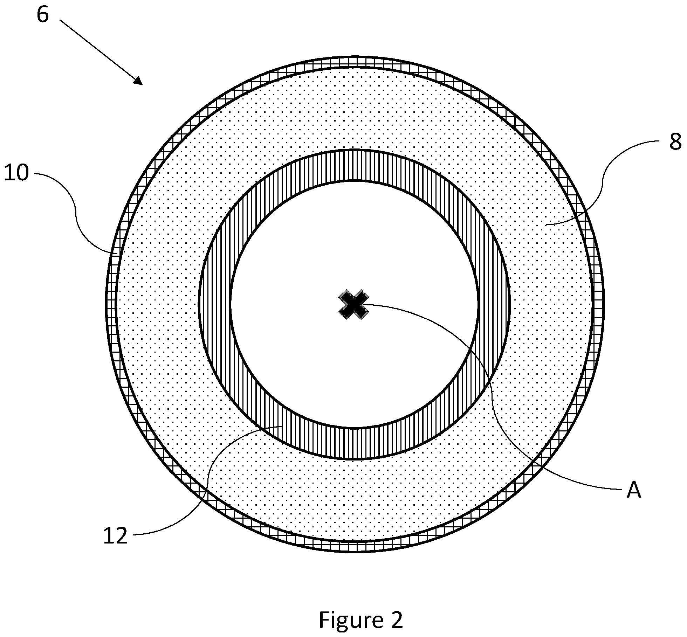

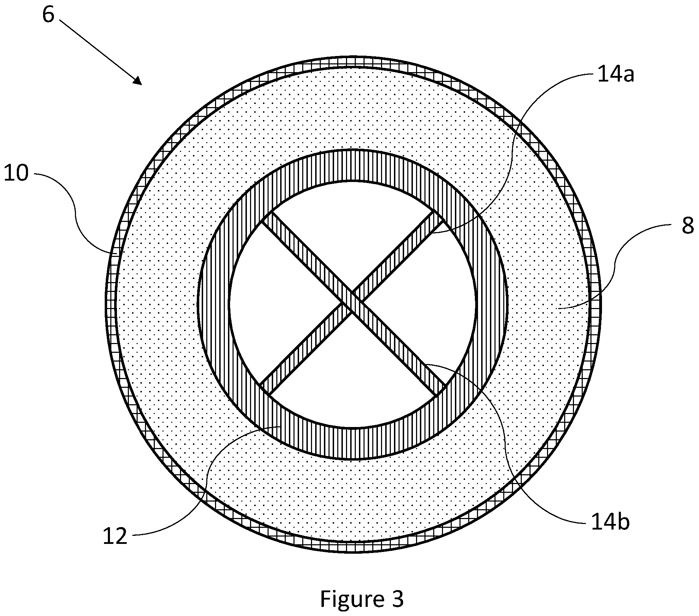

Figures 2 and 3 are cross-sectional schematic views of part of an electric motor, perpendicular to the longitudinal axis A of the motor.

Figure 2 shows a rotor 6 having an array of (permanent) magnets 8 and a sleeve 10. The array of magnets 8 may be in the Halbach arrangement as discussed in relation to Figure 1. Similarly, the sleeve 10 may be similar to that discussed in relation to Figure 1.

The motor further includes a support structure 12. The support structure 12 is located radially inwards of the array of magnets 8. The support structure 12 is a hollow cylinder that is coaxial with the longitudinal axis A of the motor. The array of magnets 8 are fixedly mounted on the support structure 12. Therefore, the support structure 12 and the array of magnets 8 are configured to rotate together about the longitudinal axis A of the motor.

As the support structure 12 is located radially inwards of the array of magnets 8, the support structure 12 is located in a region where there is substantially no flux produced by the array of magnets 8. Therefore, the support structure 12 may be (entirely) formed of non-magnetic materials, as there is no interaction between the support structure 12 and the magnetic flux from the array of magnets 8.

In some examples, the support structure 12 may be (entirely) formed of a stiff, light, non-magnetic material, such as titanium, aluminium and/or carbon fibre. This may help to reduce the inertia of the rotor 6 compared to a rotor with a heavier and/or magnetic support structure.

Figure 3 is cross-sectional schematic view of a part of a motor similar to that of Figure 2. In addition to the features discussed in relation to Figure 2, the motor of Figure 3 also includes stiffeners 14a, 14b. The stiffeners 14a, 14b extend inside the support structure 12 in a direction perpendicular to a longitudinal axis of the motor.

The stiffeners 14a, 14b may be configured to increase the stiffness of the support structure 12.

Although two stiffeners 14a, 14b are shown, it will be understood that the support structure 12 may include any suitable and desired number of stiffeners. In some examples, the stiffeners are uniformly spaced around the longitudinal axis of the motor and/or along the length of the support structure 12.

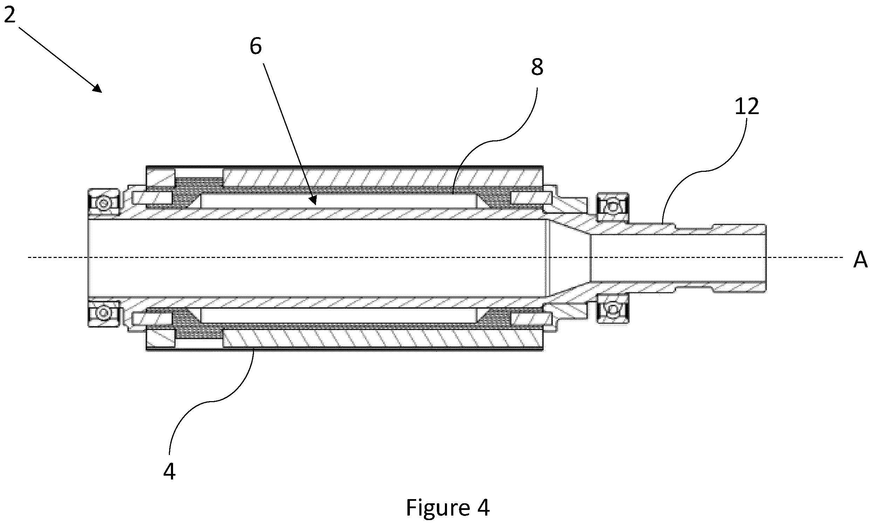

Figure 4 is a cross-sectional view of an electric motor 2, parallel to the longitudinal axis A of the motor 2. The motor 2 includes a stator 4 and a rotor 6, whereby the rotor 6 is located radially inwards of the stator 4.

The motor 2 also includes a support structure 12. The support structure 12 is a hollow prism having a circular cross-section. The diameter of the support structure 12 varies along its axial length.

The support structure 12 extends beyond the array of magnets 8 in the direction along the longitudinal axis A of the motor 2. This may enable the support structure 12 to connect to a component to be driven (e.g. an actuator). Therefore, the support structure 12 of Figure 4 may be a shaft configured to provide an output of the motor 2 to a component to be (rotationally) driven.

Therefore, the present disclosure may provide for a motor having low inertia. This may advantageously provide for more responsive control of the motor.

The Halbach arrangement helps to ensure that the magnetic flux from the array of permanent magnets is substantially zero in at least one direction. This enables the arrangement of the support structure to be selected such that there is substantially no interaction between the support structure and the magnetic flux from the array of permanent magnets.

Therefore, the support structure may be (entirely) formed of a non-magnetic material, such as titanium, aluminium and/or carbon fibre. Non-magnetic materials may be stiff and light, thereby helping to reduce the inertia of the rotor compared to a rotor with a magnetic support structure.

Therefore, the motor may be able to drive a component such as an actuator quickly, without increasing the size and/or weight of the motor.

Reducing the inertia is particularly advantageous if the motor is used to drive a system having gears. The inertia at the output of a gear system is equal to the inertia at the input of the gear system multiplied by the square of the gear ratio. Therefore, the inertia at the output of the gear system may be greater than the inertia at the input of the gear system. Hence, when a motor is being used to drive a gear system, it is particularly beneficial to use a motor having low inertia. Therefore, a motor according to the present disclosure is particularly useful for driving a gear system.

Furthermore, reducing the inertia may be particularly advantageous if the motor is used to drive an actuator. Reducing the inertia of the motor may help to reduce the momentum in the system. Therefore, the size and/or weight of other components (e.g. components of the actuator) may be reduced. For example, the size of any end stops in the system may be reduced because the braking requirements of the actuator may be lower, owing to the lower inertia and momentum.

## Claims

1. A motor configured to drive an actuator, wherein the motor comprises:
a stator; and
a rotor;
wherein the rotor comprises:
an array of permanent magnets in a Halbach arrangement; and
a support structure configured to support the array of permanent magnets;
wherein the support structure is non-magnetic.

2. The motor as claimed in claim 1, wherein the support structure is a non-magnetic material.

3. The motor as claimed in claim 1 or 2, wherein the array of permanent magnets is fixedly mounted on the support structure; and
wherein the support structure and the array of permanent magnets are configured to rotate together about a rotational axis of the motor.

4. The motor as claimed in claim 1, 2 or 3, wherein the array of permanent magnets is arranged such that the magnetic flux from the array of permanent magnets is substantially zero in at least one direction.

5. The motor as claimed in any one of the preceding claims, wherein the array of permanent magnets is arranged such that the magnetic flux from the array of permanent magnets is substantially zero radially inwards of the array of permanent magnets.

6. The motor as claimed in any one of the preceding claims, wherein the rotor is located radially inwards of the stator.

7. The motor as claimed in any one of the preceding claims, wherein the support structure is located radially inwards of the array of permanent magnets.

8. The motor as claimed in any one of the preceding claims, wherein the support structure comprises a shaft.

9. The motor as claimed in any preceding claim, wherein the support structure comprises a substantially hollow prism.

10. The motor as claimed in any preceding claim, wherein the support structure comprises a substantially hollow cylinder.

11. The motor as claimed in any preceding claim, wherein the shaft comprises one or more stiffeners;
wherein the one or more stiffeners extend inside the support structure in a direction perpendicular to a rotational axis of the motor.

12. The motor as claimed in any one of the preceding claims, wherein the support structure extends beyond the array of permanent magnets in the direction along the rotational axis of the motor.

13. The motor as claimed in any one of the preceding claims, wherein the support structure comprises a non-ferrous material.

14. The motor as claimed in any one of the preceding claims, wherein the support structure comprises a composite material, optionally carbon fibre.

15. The motor as claimed in any one of the preceding claims, wherein the support structure comprises titanium.
